# EUROPÄISCHE PATENTSCHRIFT

(11) **EP 2 279 143 B1**
(45) Veröffentlichungstag und Bekanntmachung des Hinweises auf die Patenterteilung: **26.02.2014**
(21) Anmeldenummer: 09732575.7
(22) Anmeldetag: 03.04.2009
(51) Int. Cl.: B65G 47/84, B67C 3/24

(54) **VORRICHTUNG ZUM GREIFEN UND HALTEN VON PET-FLASCHEN**
DEVICE FOR GRIPPING AND HOLDING PET BOTTLES
DISPOSITIF DE SAISIE ET DE MAINTIEN DE BOUTEILLES EN PET

(30) Priorität: 18.04.2008 DE 102008019766
(43) Veröffentlichungstag der Anmeldung: 02.02.2011
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2009/002489
(87) Internationale Veröffentlichungsnummer: WO 2009/127334

(56) Entgegenhaltungen:
- EP-A1- 1 277 693
- WO-A1-2008/009410

## Beschreibung

Die Erfindung richtet sich auf eine Vorrichtung zum Greifen und Halten von PET-Flaschen in Abfüllanlagen od. dgl. mit einem an einem Stern od. dgl. befestigbaren Tragkörper sowie daran schwenkbaren, federbelasteten Greifarmen, und wie aus der EP 1 277 693 bekannt.

Bei derartigen Flaschenabfüllanlagen gibt es eine Fülle von Lösungen, die Flaschen auf ihrem Weg durch die Anlage zu führen und zu halten. Dabei müssen die Flaschen zum Teil gewendet werden, in jedem Falle aber sicher geführt und ergriffen werden. Einen derartigen Greifer zeigt beispielsweise bei einem Rotationsförderer das DE 297 13 510 U, bei dem an einer Tragplatte schwenkbar gelagerte Greifarme vorgesehen sind, die zwischen ihren den Greifbacken gegenüberliegenden anderen Enden eine Druckfeder aufweisen, die diese Greifarme in Schließstellung zwingt. Die Flaschen können dabei über Eintrittsschräger an den Vorderseiten der Greifarme unter Zusammendrücken der Feder eingeschoben und umgekehrt wieder ausgezogen werden.

Derartige Greifer sind auch in anderen Konstruktionen bekannt, dabei ist es wünschenswert, diese Greifarme möglichst einfach und rasch auswechseln zu können, sei es, wenn der Verschleiß ein Auswechseln notwendig macht oder aber die Greifer an unterschiedliche Flaschenhalsabmessungen angepasst werden sollen, so dass ein besonders rasches und einfaches Umrüsten gewünscht wird.

Ein einfaches, schnelles und kostengünstiges Auswechseln der Greifarme ist das Ziel der vorliegenden Erfindung.

Dieses Ziel wird durch eine Vorrichtung gemäß dem Anspruch 1 erreicht. Mit dieser Gestaltung ist eine Art Schnellverschluss geschaffen, der ein schnelles, einfaches Auswechseln der Greifarme ermöglicht.

Die Greifarme sind zweckmäßig zu ihrer Drehung am Schwenkzapfen gelagert, die bei einem solchen Wechsel ggf. mit aus dem Tragkörper heraus entnehmbar sind.

Zusätzlich kann nach der Erfindung vorgesehen sein, dass das Fixierelement von einer die Lagerenden der Greifarme haltenden, in eine die Lagerenden freigebenden Stellung bewegbar ist, wobei beispielsweise in einer Ausgestaltung nach der Erfindung vorgesehen sein kann, dass ein derartiges Fixierelement als Exzenterscheibe od. dgl. ausgebildet ist. Damit ist es möglich, durch eine einfache Drehung des Fixierelementes die Schwenk- bzw. Lagerenden der Greifarme zum Auswechseln freizugeben.

Die Erfindung sieht in weiterer Ausgestaltung auch vor, dass die Greifarme an ihrem dem jeweiligen Greifende gegenüberliegenden Lagerende mit in den Tragkörper einführbaren Schwenkzapfen und zwischen Lagerende und Greifende positioniertem Befestigungszapfen für eine in Schließrichtung wirkende Zugfeder ausgerüstet sind, was wiederum dafür sorgt, dass die Zugfeder frei zugänglich ist, um ein einfaches Auswechseln zu ermöglichen.

Diesem Ziel dient auch eine weitere Ausgestaltung der Erfindung, die darin besteht, dass die Befestigungszapfen mit Ringnuten zum werkzeugfreien Einhängen der Zugfeder ausgerüstet sind.

Einem schnellen Wechseln derartiger Einrichtungen dient auch eine zusätzliche weitere Ausgestaltung der Erfindung, die darin besteht, dass der Tragkörper seitliche, verformbare Montagelaschen aus einem elastischen Material aufweist zur klemmenden Anlage an Fixierelementen am Transportstern, Rinser, Füller od. dgl.

Schließlich kann nach der Erfindung auch noch vorgesehen sein, dass der Tragkörper insgesamt aus einem elastischen Material gebildet ist.

Die oben genannten Maßnahmen dienen der schnellen, einfachen und kostengünstigen Wechselmöglichkeit der Greifarme an derartigen Maschinenteilen, so dass sich die Maschinen leicht und schnell und wirtschaftlich umrüsten lassen, wenn beispielsweise eine andere Halsgröße von Flaschen zu beaufschlagen ist.

Weitere Einzelheiten, Merkmale und Vorteile der Erfindung ergeben sich aufgrund der nachfolgenden Beschreibung sowie anhand der Zeichnung. Diese zeigt in
Fig. 1 in räumlicher Darstellung eine Aufsicht auf die erfindungsgemäße Greifvorrichtung,
Fig. 2 in räumlicher Darstellung die Aufsicht von der Gegenseite der Greifvorrichtung,
Fig. 3 eine Aufsicht auf die Vorrichtung,
Fig. 4 bis 6 in räumlicher Darstellung Ansichten der erfindungsgemäßen Vorrichtung mit unterschiedlichen Greifarmen,
Fig. 7 in Aufsicht die Vorrichtung mit entfernter Feder,
Fig. 8 in räumlicher Darstellung die Vorrichtung mit einem ausgehobenen Greifarm,
Fig. 9 in räumlicher Darstellung eine Teilansicht eines Sternes mit einer eingebauten Vorrichtung nach der Erfindung sowie in
Fig. 10 in gleicher Darstellung wie Fig. 9 einen Stern mit ausgebauter Vorrichtung.

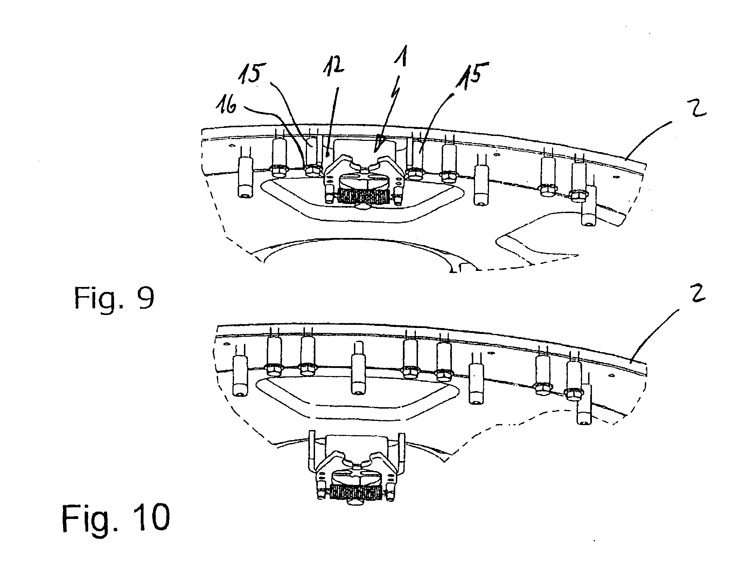

Die allgemein mit 1 bezeichnete Vorrichtung wird an einem Stern od. dgl. in einer Mehrzahl positioniert, wobei der Stern in den Fig. 9 und 10 mit 2 bezeichnet ist und dort nur ausschnittweise wiedergegeben ist.

Die Vorrichtung 1 wird von einem Tragkörper 3 aus einem elastischen Material gebildet, das in einem Ansatz 4 Aufnahmeausnehmungen 5 aufweist zur Aufnahme von Drehzapfen 6, an denen ein mit 7a bzw. 7b bezeichneter Greifarm befestigt ist.

Jeder Arm 7a, 7b weist einen nach außen vorstehenden Befestigungszapfen 8a bzw. 8b auf, wobei jeder Zapfen mit einer Nut 9 ausgestattet ist, um die Ringenden einer Zugfeder 10 aufzunehmen, die die beiden Greifarme 7a, 7b in Schließstellung zwingt.

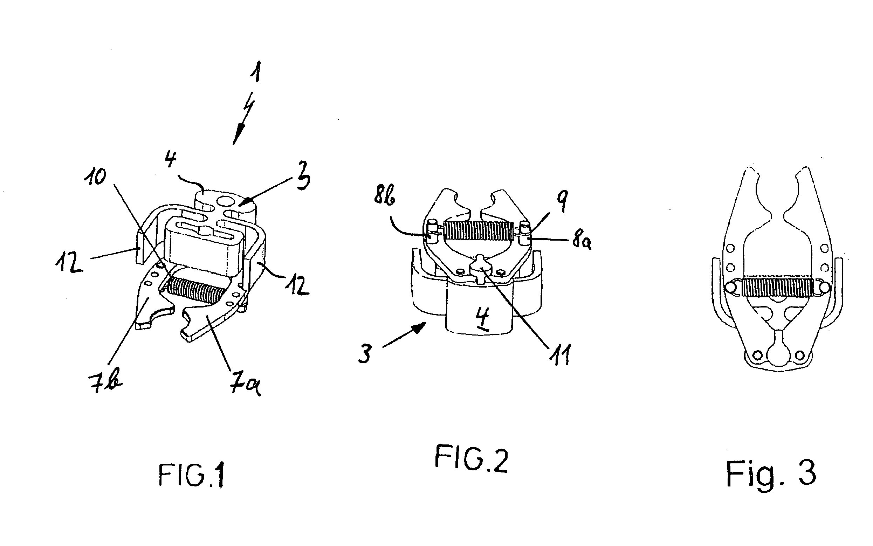

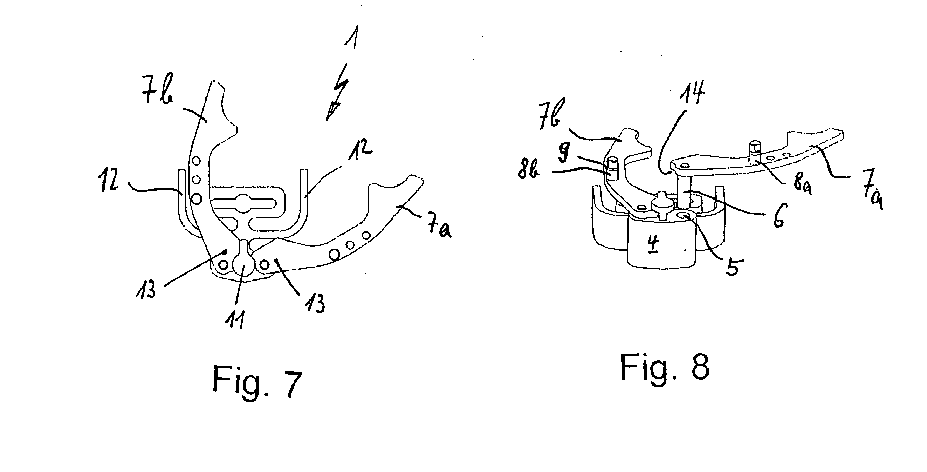

Wie sich aus den Figuren, insbesondere den Fig. 2 und 7, ergibt, ist im Tragkörper 3, auch hier im Ansatz 4, ein Fixierelement 11 positioniert, das mit einem tellerförmigen Kopf die Endbereiche bzw. die Lagerenden, in Fig. 7 mit 13 bezeichnet, sperrend übergreift. Zum in Fig. 8 dargestellten Ausheben eines Greifarmes ohne Zuhilfenahme von Werkzeugen bedarf es lediglich des Ausklinkens der Feder 10 und eines Aufschwenkens des auszuwechselnden Federarmes 7a bzw. 7b in eine extreme seitliche Position, wie sie etwa in den Fig. 7 und 8 dargestellt ist.

Ein Ausheben wird bei der in den Fig. 7 und 8 dargestellten Ausführungsform dadurch ermöglicht, dass das Lagerende der Greifarme 7 mit einem Rücksprung oder einer Ausfräsung 14 versehen ist, die das Ausheben, in Fig. 8 nach oben, ermöglicht.

Nicht dargestellt ist die Möglichkeit, dass das Fixierelement 11 einen exzentrischen Tellerkopf aufweist, der so gestaltet ist, dass bei Drehung des Fixierelementes 11 das entsprechende Lagerende 13 jedes Schwenkarmes 7 freigegeben wird.

Zum einfachen, werkzeugfreien Austausch der gesamten Vorrichtung 1 weist der Tragkörper 3 elastisch verformbare Fixierelemente 12 in Lappenform auf, die sich zwischen Stützstiften 15 am Stern einklemmen können, wobei die Stützstifte 15 Tellerköpfe oder Beilegscheiben 16 aufweisen, die den elastischen Lappen 12 am Ausfallen hindern.

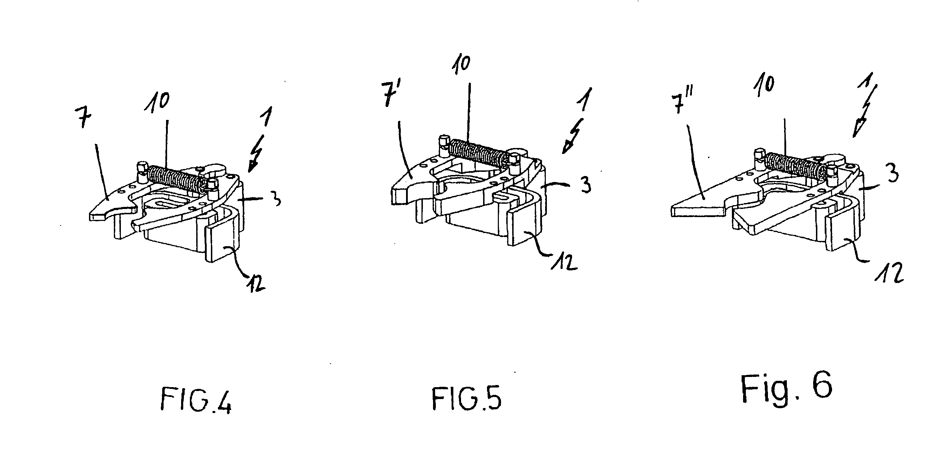

In den Fig. 4 bis 6 sind unterschiedlich gestaltete Greifarme 7, 7' und 7" dargestellt, die erkennbar durch einfache Handgriffe gegeneinander austauschbar sind.

## Patentansprüche

1. Vorrichtung (1) zum Greifen und Halten von PET. Flaschen in Abfüllanlagen od. dgl. mit einem an einem Stern (2) od. dgl. befestlgbaren Tragkörper (3) sowie daran schwenkbaren, federbelasteten Greifarmen (7) mit Greifenden und gegenüberliegenden Lagerenden (13), **gekennzeichnet durch** ein zwischen der Lagerenden (13) der Greifarme (7) positioniertes und die Lagerenden in Schwenkachsrichtung haltendes Fixierelement (11), wobei die Lagerenden (13) der Greifarme einen Rücksprung (14) aufweisen, welcher bei Positionierung eines Greifarmes (7) in extremer Öffnungslage das Ausheben des Grelfarmes (7) in Schwenkachsrichtung am Fixierelement (11) vorbei ermöglicht.

2. Vorrichtung nach Anspruch 1, **dadurch gekennzeichnet, dass** das Fixierelement (11) von einer die Lagerenden der Greifarme (7) haltenden, in eine die Lagerenden (13) freigebenden Stellung bewegbar ist.

3. Vorrichtung nach Anspruch 1 oder 2, **dadurch gekennzeichnet, dass** das Fixierelement (11) als Exzenterscheibe od. dgl. ausgebildet ist.

4. Vorrichtung nach einem der vorangehenden Ansprüche, **dadurch gekennzeichnet**, dase die Greifarme (7) an ihrem dem jeweiligen Greifende gegenüberliegenden Lagerende (13) mit in den Tragkörper (3) einführbaren Schwenkzapfen (6) und zwischen Lagerende (13) und Greifende positioniertem Befestigungszapfen (8) für eine in Schließrichtung wirkende Zugfeder (10) ausgerüstet sind.

5. Vorrichtung nach Anspruch 4, gekennzeichnet, dass die Befestigungszapfen (8) mit Ringnuten (9) zum werkzeugfreien Einhängen der Zugfeder (10) ausgerüstet sind.

6. Vorrichtung nach einem dervorangehendenAnsprüche, **dadurch gekennzeichnet, dass** der Tragkörper (3) seitliche, verformbare Montagelaschen (12) aus einem elastischen Material aufweist zur klemmenden Anlage an Fixierelementen am Transportstern, Rinser, Füller od. dgl.

7. Vorrichtung nach Anspruch 6. **dadurch gekennzeichnet, dass** der Tragkörper (3) insgesamt aus einem elastischen Material gebildet ist.

## Claims

1. A device (1) for gripping and holding PET bottles in filling systems or the like, having a carrier body (3) that can be mounted on a star-shaped element (2) or the like and spring-loaded gripper arms (7) being able to pivot on said carrier body and having gripper ends and opposite bearing ends (13), **characterised by** a fixing element (11) which is positioned between the bearing ends (13) of the gripper arms (7) and which holds the bearing ends in the direction of the axis of rotation, with the bearing ends (13) of the gripper arms exhibiting an edge recess (14) which, when a gripper arm (7) is positioned in the extreme open position, enables the gripper arm (7) to be lifted out in the direction of the axis of rotation past the fixing element (11).

2. The device of claim 1 wherein the fixing element (11) can be moved from a position holding the bearing ends of the gripper arms (7) to a position releasing the bearing ends (13).

3. The device of claim 1 or 2 wherein the fixing element (11) is configured as an eccentric disc or the like.

4. The device of any one of the preceding claims wherein the gripper arms (7) are equipped at their bearing end (13) which lies opposite the respective gripper end with pivot pins (6) that can be introduced into the carrier body (3) and with a fastening peg (8) positioned between bearing end (13) and gripper end for a tension spring (10) which acts in the closing direction.

5. The device of claim 4 wherein the fastening pegs (8) are equipped with circumferential grooves (9) that receive the tension spring (10) without the need for tools.

6. The device of any one of the preceding claims wherein the carrier body (3) exhibits lateral, deformable mounting lugs (12) made from an elastic material for a clamping attachment to fixing elements on the transport star-wheel, rinser, filler or the like.

7. The device of claim 6 wherein the entire carrier body (3) is formed from an elastic material.

## Revendications

1. Dispositif (1) de saisie et de maintien de bouteilles en PET dans des installations de remplissage ou similaires avec un corps porteur (3) pouvant être fixé sur une étoile (2) ou similaire ainsi que des bras de saisie (7) sollicités par ressort, pouvant pivoter dessus avec des extrémités de saisie et des extrémités de palier en regard (13), **caractérisé par** un élément de fixation (11) positionné entre les extrémités de palier (13) des bras de saisie (7) et maintenant les extrémités de palier dans le sens de l'axe de pivotement, les extrémités de palier (13) des bras de saisie présentant un retrait (14) qui permet, lors du positionnement d'un bras de saisie (7) dans la position d'ouverture extrême, le levage du bras de saisie (7) dans le sens de l'axe de pivotement devant l'élément de fixation (11).

2. Dispositif selon la revendication 1, **caractérisé en ce que** l'élément de fixation (11) peut être déplacé d'une position maintenant les extrémités de palier des bras de saisie (7) à une position libérant les extrémités de palier (13).

3. Dispositif selon la revendication 1 ou 2, **caractérisé en ce que** l'élément de fixation (11) est réalisé comme un disque d'excentrique ou similaire.

4. Dispositif selon l'une quelconque des revendications précédentes, **caractérisé en ce que** les bras de saisie (7) sont équipés, sur leur extrémité de palier (13) en regard de l'extrémité de saisie respective, de tenons de pivotement (6) pouvant être introduits dans le corps porteur (3) et de tenons de fixation (8) positionnés entre l'extrémité de palier (13) et l'extrémité de saisie pour un ressort de traction (10) agissant dans le sens de fermeture.

5. Dispositif selon la revendication 4, **caractérisé en ce que** les tenons de fixation (8) sont équipés de rainures annulaires (9) pour l'accrochage sans outil du ressort de traction (10).

6. Dispositif selon l'une quelconque des revendications précédentes, **caractérisé en ce que** le corps porteur (3) présente des languettes de montage 12) latérales, déformables en un matériau élastique pour l'appui par serrage contre des éléments de fixation sur l'étoile de transport, la rinceuse, la remplisseuse ou similaire.

7. Dispositif selon la revendication 6, **caractérisé en ce que** le corps porteur (3) est constitué dans l'ensemble d'un matériau élastique.
